**Europäisches Patentamt**

**European Patent Office**

**Office européen des brevets**

(19)

(11) Veröffentlichungsnummer : **0 383 236 B1**

(12) # EUROPÄISCHE PATENTSCHRIFT

(45) Veröffentlichungstag der Patentschrift :
**30.12.92 Patentblatt 92/53**

(51) Int. Cl.$^5$: **B60H 3/06,** B03C 3/28

(21) Anmeldenummer : **90102721.9**

(22) Anmeldetag : **12.02.90**

(54) **Filter, insbesondere für ein Fahrzeug.**

(30) Priorität : **16.02.89 DE 3904623
16.02.89 DE 8901798 U**

(43) Veröffentlichungstag der Anmeldung :
**22.08.90 Patentblatt 90/34**

(45) Bekanntmachung des Hinweises auf die
Patenterteilung :
**30.12.92 Patentblatt 92/53**

(84) Benannte Vertragsstaaten :
**DE FR GB IT SE**

(56) Entgegenhaltungen :
**DE-A- 2 941 094
DE-A- 3 704 458
DE-U- 8 700 521
US-A- 3 651 659
PATENT ABSTRACTS OF JAPAN vol. 9, no.
317 (C-319)(2040) 12 Dezember 1985, & JP-A-60
150812 (TOYO BOSEKI K.K.) 08 August1985,**

(73) Patentinhaber : **HELSA-WERKE Helmut
Sandler GmbH & Co. KG
Postfach 60
W-8586 Gefrees (DE)**

(72) Erfinder : **Weiss, Anna-Maria,
Dr.-Friedrich-Hess-Strasse 39,
W-8562 Wunsiedel, (DE)**
Erfinder : **Hoffmann, Regina,
Klosterberglein 7,
W-8660 Münchberg, (DE)**

(74) Vertreter : **LOUIS, PÖHLAU, LOHRENTZ &
SEGETH
Kesslerplatz 1 Postfach 3055
W-8500 Nürnberg-1 (DE)**

## Beschreibung

Die Erfindung betrifft ein Filter insbes. für die Reinigung der einer Fahrgastzelle eines Fahrzeugs zugeführten Luft, mit einer zick-zack-förmig gefalteten Partikel- und Adsorberfilterlage, wobei die Partikelfilterlage und die Adsorberfilterlage in Strömungsrichtung der Luft hintereinander angeordnet sind und die Partikelfilterlage flächig unmittelbar neben der Adsorberfilterlage angeordnet und mit der Adsorberfilterlage gemeinsam derart zick-zack-förmig zusammengefaltet ist, dass die Faltabschnitte der Adsorberfilterlage und die Faltabschnitte der Partikelfilterlage in der Luftströmungsrichtung liegen und ineinandergreifen.

Ein derartiges Filter ist aus der DE-OS 25 12 695 bekannt. Dort ist eine Verstärkungsschicht vorgesehen, welche die Partikelfilterlage bildet. Die Verstärkungsschicht kann aus organischen und/oder anorganischen Fasern bestehen, bei denen es sich z.B. um Polyesterfasern, Polyamidfasern, Polypropylenfasern, Reyonfasern, Asbestfasern, Gesteinswolle und Schlackenwolle handeln kann. Bei diesem bekannten Filter sind die Filtereigenschaften bezüglich der Grösse der zu filternden Partikel begrenzt, wobei die Filtereigenschaften zur Partikelgrösse mindestens annähernd umgekehrt proportional sind. D.h., dass die Filtereigenschaften für sehr kleine Partikel noch Wünsche offen lassen können.

Die DE-A 2 941 094 offenbart ein Luftfilterelement, das aus einer Kombination von elektretisiertem und nichtelektretisiertem Filtermaterial besteht. Hierbei kann das elektretisierte und/oder das nichtelektretisierte Filtermaterial ein- oder mehrlagig ausgebildet sein. Beide Filtermaterialien können gemeinsam zick-zack-förmig gefaltet ineinandergreifen.

Die DE-OS 24 06 243 beschreibt ein Filter, das mehrere Lagen aufweisen kann, wobei mindestens eine Lage ein Stabilisierungssystem für das Filter bildet. Bei diesem bekannten Filter handelt es sich insbesondere um ein Partikelfilter.

Aus der EP 045 516 B1 ist ein Filter bekannt, das insbesondere zur Reinigung der einer Fahrgastzelle eines Fahrzeugs zugeführten Luft vorgesehen und mit einer Partikelfilterlage und einer zick-zack-förmig gefalteten Adsorberfilterlage ausgebildet ist, wobei die Partikelfilterlage und die Adsorberfilterlage in Strömungsrichtung der Luft hintereinander angeordnet sind. Dort sind mehrere in Gasströmungsrichtung aufeinanderfolgende Lagen eines gasdurchlässigen Trägermaterials vorgesehen, in oder auf dem Sorbentien angeordnet sind. Das Trägermaterial ist jeweils mit mindestens zwei unmittelbar oder mittelbar aufeinanderfolgenden Lagen zusammenhängend ausgebildet und weist deshalb eine Länge auf, die mindestens gleich der Länge zweier Lagen ist. Das Trägermaterial weist mindestens zwei Längenabschnitte auf, in oder auf denen jeweils verschiedene Sorbentien angeordnet sind. Bei diesem bekannten Filter ist die der zick-zack-förmig gefalteten Adsorberfilterlage in Strömungsrichtung der zu filternden Luft vorgeschaltete Partikelfilterlage einlagig ebenflächig ausgebildet. Die Faltabschnitte der zick-zack-förmig gefalteten Adsorberfilterlage sind zur Strömungsrichtung der zu filternden Luft senkrecht ausgerichtet, so dass sich durch die relativ dicke Partikelfilterlage und durch die zur Anzahl der Faltabschnitte der Adsorberfilterlage proportionale Gesamtdicke der Adsorberfilterlage ein relativ dickes Filter ergibt, um gewünschte Filtereigenschaften realisieren zu können.

Die DE 32 12 289 A1 beschreibt ein Filter zum Reinigen der Luft für nach aussen abgeschlossene Räume, insbes. für Fahrzeuge, das in einem Filtergehäuse durch einen Deckel verschliessbare Öffnungen zum Herausnehmen der durch Halterungen eingespannten Schwebstoff- und Gasfilter besitzt. Dort ist ein Schwebstofffilter und ein kombiniertes Schwebstoff-Gasfilter gleicher Abmessungen wahlweise durch die gleiche Einschuböffnung eingesetzt und in gleiche Halterungen eingespannt. Dieses bekannte Filter weist ein zick-zack-förmig gefaltetes Partikelfilter und gegebenenfalls ein in Strömungsrichtung der zu filternden Luft nachgeschaltetes plattenförmiges Gasfilter auf. Auch dieses Filter muss zur Erzielung gewünschter Filtereigenschaften eine bestimmte Mindestgesamtdicke aufweisen.

Aus der EP 084 143 A1 ist ein Verfahren zur Herstellung einer Filtermatte bekannt, bei dem thermisch erweichbare Fasern allein oder in Abmischung mit nicht erweichbaren Fasern zu einem Vlies vereint werden, das bei einem Flächengewicht von 75 bis 200 g/m$^2$ einen Druckabfall von 1 bis 3 mm Wassersäule aufweist, gemessen bei einer Luftgeschwindigkeit von 2 m/sek. Das Vlies wird auf ein thermisch erweichbares Gitter mit diskret verteilten, konvex ausgebildeten Bereichen aufgelegt, die sich um wenigstens 0,3 mm über seine Oberfläche erheben. Das Gitter weist einen Schmelzpunkt von 50°C oder mehr unterhalb des Schmelzpunktes der thermisch erweichbaren Fasern auf. Das so erhaltene Mehrschichtgebilde wird aus der Richtung des Vlieses auf eine Temperatur erwärmt, die mindestens 20°C oberhalb des Schmelzpunktes des Gitters, jedoch unterhalb des Schmelzpunktes der thermisch erweichbaren Fasern liegt. Zur gegenseitigen Verbindung wird eine Verpressung vorgenommen. Auf diese Weise ergibt sich eine Filtermatte aus einem Vliesstoff und einem punktuell aufgeschmolzenen Gitter, wobei sich eine Filtermatter guter mechanischer Stabilität mit einem relativ geringen Druckabfall ergibt.

Die EP 100 907 B1 beschreibt ein Luftreinigungsgerät bzw. ein flexibles Flächenfilter mit einer luftdurchlässigen Trägerschicht aus einem textilen Flächengebilde, das heterophile Fasern enthält, die zwei koaxial angeordnete Komponenten aufweisen, von denen die äussere bei erhöhter Temperatur weich

2

und klebrig wird ohne zu schmelzen, so dass Adsorberpartikel daran fixiert werden können. Dort ist ausgeführt, dass Flächenfilter den Vorteil haben, dass sie sich in einfacher Weise an die jeweiligen Erfordernisse anpassen lassen. Eine grosse nutzbare Filterfläche ist durch ziehharmonikaähnliche Zick-zack-Faltung oder durch Anordnung in Form runder Wickel erzielbar. Bei diesem Filter handelt es sich um ein bspw. mit Aktivkohlekörnern versehenes Adsorberfilter. Um die Lebensdauer hochwertiger Adsorbentien, die bekanntlich sehr aufwendig und teuer sind, und damit die Kosten für die Luftreinigung zu senken, wird dort vorgeschlagen, dem Filter mit dem hochwertigen Adsorbens ein ebenfalls als Flächenfilter ausgebildetes und mit einem handelsüblichen preiswerten Adsorbens versehenes Filter vorzuschalten, das nicht gasförmige Luftverunreinigungen mechanisch abscheidet, aber auch gasförmige leicht adsorbierbare Stoffe adsorbiert. Dort wird demnach ein mit einem preiswerten Adsorbens versehenes Filter vorgeschaltet. Die Partikelfilterlage weist also ebenfalls Adsorberpartikel auf, ohne diese zur Partikelfilterung eigentlich zu benötigen.

Ein Flächenfilter aus einem luftdurchlässigen textilen Trägermaterial und darauf mit einem Kleber in gleichmässiger Verteilung fixierten Aktivkohleteilchen eines Durchmessers von 0,1 bis 1 mm ist aus der EP 118 618 D1 bekannt. Der Kleber ist mittels einer Schablone als punkt- oder linienförmiges Muster einer Höhe von 0,05 bis 0,5 mm und eines Durchmessers bzw. einer Breite von 0,2 bis 1 mm aufgedruckt, wobei das Muster nur 30 bis 70 % der Oberfläche des Trägermaterials bedeckt. Der Kleber ist ein lösungsmittelfreies Polyurethan, ein selbstvernetzendes Acrylat oder ein Schmelzkleber.Bei diesem Flächenfilter handelt es sich demnach insbes. um ein Adsorberfilter.

Das DE-GM 86 17 256 beschreibt ein Schwebstofffilter zur Gasreinigung, das in Separator-Fadentechnik mit zusätzlichen Stabilisierungsabstandshaltefäden hergestellt ist. Auf der Reinluft- bzw. Abströmseite des zick-zack-förmig vorgefalteten Schwebstofffilterpapiers sind zwischen den Faltenabstandshaltefäden ein oder mehrere Stabilisierungsabstandshaltefäden auf das Schwebstofffilterpapier aufgetragen, deren Querschnitt halb so gross ist, wie der der schnurartigen, einen kreisrunden Querschnitt besitzenden Faltenabstandshaltefäden. Bei dieser bekannten Filtereinrichtung handelt es sich nur um ein Partikelfilter. Adsorbereigenschaften weist dieses Schwebstofffilter nicht auf.

Ein Innenraumluftfilter für Kraftfahrzeuge ist aus dem DE-GM 87 00 521 bekannt. Dieses Innenraumluftfilter umfasst einen im wesentlichen luftundurchlässigen Rahmen, sowie an den offenen Seiten des Rahmens angeordnete luftdurchlässige Seitenteile. Das Filterbett dieses Filters enthält Kunststoffasermaterial. Der Filterrahmen ist an seinem Aussenumfang mit einem Dichtungsabschnitt versehen, der mit einem Dichtungsbereich des Gehäusesabschnittes zusammenwirkt. Das Filterbett weist eine Selektivität für Strassenstaub auf, wobei mindestens zwei voneinander verschiedene Bereiche unterschiedliche Einzelselektivitäten besitzen. Bei diesem Innenraumluftfilter handelt es sich um ein Kombinationsfilter aus mehreren plattenförmigen Lagern, bei denen es sich um eine partikelfilternde Lage und um mindestens eine Adsorberlage handeln kann. Die einzelnen Lagen sind jedoch einfach ebenflächig über- bzw hintereinander angeordnet, so dass zur Erzielung ausreichender Filtereigenschaften eine bestimmte Mindestgesamtdicke des Filters nicht unterschritten werden kann. Das bedingt jedoch einen bestimmten Mindestströmungswiderstand und somit einen nicht zu unterschreitenden Druckabfall durch das Filter hindurch.

Die DE 37 19 418 C1 offenbart ein Verfahren zur Herstellung eines Filtermaterials, bei dem auf einem offenporigen Schaumstoffträger bzw. an seiner Porenoberfläche kleinere und grössere Adsorberpartikel in getrennten Arbeitsgängen befestigt werden. Bei der Durchführung dieses Verfahrens wird derartig vorgegangen, dass der Schaumstoffträger mit einer Kleberschicht versehen wird, dass dann die grösseren Adsorberpartikel auf den bzw. in die offenen Poren des Schaumstoffträgers auf- bzw. eingebracht werden, und dass anschliessend auf den bzw. in die offenen Poren des Schaumstoffträgers bei noch nicht ausgehärteter Kleberschicht die kleineren Adsorberpartikel auf- bzw. eingebracht werden. Mit diesem Verfahren wird folglich ein Adsoberfilter hergestellt. Eine Kombination eines Adsorberfilters mit einem Partikelfilter ist dieser Druckschrift nicht zu entnehmen.

Aus der DE-AS 12 54 127 ist ein Verfahren zur Herstellung einer Filterschicht unter Verwendung einer Faserbahn in Vliesform mit einem körnigen, sorbierenden Hilfsmaterial, sowie eine auf diese Weise hergestellte Filterschicht bekannt. Dabei wird ein kissenartiges Vlies in einer dem Endprodukt entsprechenden, im wesentlichen gliechbleibenden Dicke als stabiles gitterartiges Gerüst in vorzugsweise horizontaler Ebene auf einem Förderband geführt und zunächst durch ein Klebemittel gleichmässig benetzt. Anschliessend wird unter einem Verteiler das körnige Filterhilfsmaterial in einer Menge von etwa 4 Vol-% des Volumens des Faserkissens zudosiert und erfoderlichernfalls dieses Kissen mit Klebestoff und körnigem Filterhilfsmaterial einem Härteofen zugeführt, wobei schliesslich das Vliesband wahlweise in seiner Länge in gebrauchsgerechte Grössen geteilt wird. Diese Filterschicht kann gleichzeitig zur Abscheidung von Partikeln, d.h. z.B. von Staub, und zur Geruchsbeseitigung verwendet werden. Auch dort können die Partikelfiltereigenschaften jedoch noch Wünsche offen lassen.

Die DE-OS 37 09 827 beschreibt ein Verfahren zur Herstellung eines Filterelementes mit einer Aufeinanderfolge von miteinander in Verbindung stehenden Falten, wobei das Filterwerkstoffband der Faltenhöhe entsprechend zick-zack-förmig gefaltet, die gebildeten Filtertaschen an den Aussenkaten materialschlüssig verschlossen und das so gebildete Faltenband hinsichtlich der einzelnen Falten im gewünschten Abstand der Falten voneinander eingestellt wird. Dabei wird im Bereich der seitlichen Aussenkanten der gebildeten Filtertaschen an die beiden seitlichen Unterkanten des Filterbandes je ein Dichtungsband herangeführt und materialschlüssig an den seitlichen Aussenkanten des Faltenbandes dadurch festgelegt, dass das Dichtband an seiner mit den seitlichen Aussenkanten in Berührung kommenden Seite mit einer Haftschicht versehen ist. Mit diesem Verfahren soll insbs. eine einfache und schnelle Festlegung der Falten im Abstand zueinander und die erforderliche Abdichtung im unteren Bereich der seitlichen Aussenkanten einfach und schnell hergestellt werden können, wobei gleichzeitig der bislang nicht zu vermeidende Verlust an freier Fläche an der Unterseite des Filterbandes vermieden wird.

Der Erfindung liegt die Aufgabe zugrunde, ein Filter der eingangs genannten Art zu schaffen, das ausser guten Adsorbereigenschaften auch derart gute Partikeleigenschaften aufweist, dass auch Feinstpartikel in der Grössenordnung um 1 $\mu$ vor Erreichen der Adsorberfilterlage abgeschieden werden, so dass eine durch solche Partikel mögliche Reduktion der aktiven Oberfläche der Adsorberfilterlage verhindert wird, und das sich in einem Fahrzeug gegebenen Raum problemlos einpassen lässt.

Diese Aufgabe wird erfindungsgemäss dadurch gelöst, dass die Partikelfilterlage zwei Lagen aus Elektretfiltermaterial aufweist, zwischen welchen ein plastisch verformbares, als Gitter aus Kunststoffmaterial ausgebildetes Versteifungselement angeordnet ist, wobei die beiden Elektretmateriallagen und das Versteifungselement einen Verbund bilden, und dass die Adsoberfilterlagen einen luftdurchlässigen dünnen Trägerkörper aufweist, an oder in dem Adsoberpartikel mittels eines Bindemittels fixiert sind.

Durch die gemeinsame zick-zack-förmige Faltung der Partikelfilterlage und der Adsorberfilterlage ergibt sich ein Filter,bei dem der Druckabfall durch das Filter hindurch bei guten Partikelfiltereigenschaften und guten Adsorptionseigenschaften relativ gering ist.

Durch das Elektretfiltermaterial ist es in vorteilhafter Weise möglich, Feinstpartikel sowie partikelgebundene Schadstoffe bis in die Grössenordnung von 0,1 $\mu m$ abzuscheiden. Derartig kleine Feinstpartikel bzw. partikelgebundene Schadstoffe würden in der Anfangsphase der Partikelabscheidung von ungeladenen Partikelfiltern durchgelassen. Durch die Anwendung eines Elektretfiltermaterials für die Partikelfilterlage wird demzufolge die der Partikelfilterlage in Strömungsrichtung der zu filternden Luft nachgeschaltete Adsorberfilterlage vor einer Verschmutzung durch die genannten Feinstpartikel bzw. partikelgebundenen Schadstoffe geschützt,so dass eine Reduzierung der aktiven Oberfläche der Adsorberfilterlage verhindert wird.

Die elektrostatische Aufladung der Mikrofasern des Elektretfiltermaterials kann sowohl bei der Vliesherstellung als auch nachträglich vorgenommen werden.

Die mindestens zwei Lagen aus Elektretfiltermaterial aufweisende Partikelfilterlage mit dem plastisch verformbaren Versteifungselement weist den Vorteil auf, dass dieser Verbund aus den Elektretmateriallagen und dem Versteifungselement einfach handhabbar ist, was sich auf die Herstellungskosten eines solchen Filters positiv auswirkt. Durch das luftdurchlässige Versteifungselement, ergibt sich eine Partikelfilterlage guter Formbeständigkeit und Standfestigkeit, wobei sich diese verbesserte Standfestigkeit auf die Standfestigkeit des gesamten Filters, d.h. des die Partikelfilterlage und die Adsorberfilterlage aufweisenden Filters auswirkt. Das ist nicht nur für die Herstellung, d.h. für die Konfektionierung des Filters von Vorteil, sondern auch beim Einsatz desselben in einem Fahrzeug.

Als vorteilhaft hat sich für das Kunststoffgitter der Partikelfilterlage Polypropylen erwiesen.

Das Elektretfiltermaterial kann Polysulfon-, Fluorcarbon-, Polyvinylchlorid-, Polycarbonat-, Polyester-, Polyethylen-und/oder Polypropylenmikrofasern aufweisen. Ein solches Elektretfiltermaterial besitzt eine ausgezeichnete Standzeit.

Bei dem Elektretfiltermaterial kann es sich um ein Elektretvlies handeln, dessen Flächengewicht vorzugsweise zwischen 20 und 500 g/mm$^2$ liegt, seine Dicke beträgt vorzugsweise zwischen 0,1 und 10 mm.

Vorzugsweise besteht der Trägerkörper der Adsorberfilterlage aus einem Spinnvlies aus einem synthetischen Fasermaterial. Als besonders vorteilhaft hat sich erwiesen,wenn der Trägerkörper der Adsorberfilterlage aus einem Polyesterund/oder Glasfaservlies besteht. Zur Fixierung der Adsorberpartikel am Trägerkörper der Adsorberfilterlage dienen als Bindemittel vorzugsweise selbstvernetzende Polymerdispersionen wie Polyurethane oder Polyacrylate, oder thermoplastische Kunststoffe wie Polyester oder Polyamid.

Als erfindungswesentlich ist der dünne luftdurchlässige Trägerkörper der Adsorberfilterlage anzusehen, weil es erst aufgrund dieses dünnen Trägerkörpers möglich ist, eine Plissierung des Verbundes aus der Partikelfilterlage und der Adsorberfilterlage vorzunehmen. Die Plissierung der beiden zuletzt genannten Lagen erfolgt mittels an sich bekannter Standardverfahren durch Druck- und Temperaturanwendung. Die Plissierung bewirkt in besonders vorteilhafter Weise eine Flächenvergrösserung bzw. eine Reduktion der Anströmgeschwindigkeit der schad- und geruchstoffbeladenen Luft und damit eine vorteilhafte Erhöhung der Filterleistung.

Die Adsorberpartikel können aus Aktivkohle und/ oder aus synthetischen Polymeradsorbern, aktivierten Resinen oder Zeolithen mit einer Partikelgrösse zwischen 0,05 und 2 mm bestehen. Vorzugsweise weisen die Partikel eine Grösse zwischen 0,1 und 1 mm auf. Die beidseitige Belegung des Trägerkörpers der Adsorberfilterlage mit Aktivkohle und/oder mit synthetischem Ionenaustauschermaterial der zuletzt beschriebenen Art hat den Sinn, pro Flächeneinheit der Adsorberfilterlage eine ausreichende Menge Adsorberpartikel unterbringen zu können, wobei etwaige Fehlstellen auf der einen Seite der Adsorberfilterlage durch Adsorberpartikel auf der gegenüberliegenden zweiten Seite abgedeckt werden.

Als vorteilhaft hat es sich erwiesen, wenn am Umfangsrand des Filters ein Rahmenelement vorgesehen ist. Das Rahmenelement kann aus Kunststoff und/oder aus Metall bestehen, wodurch die gemeinsam eng zusammengefaltete Partikelfilterlage und Adsorberfilterlage fixiert sind. Dadurch ergibt sich ein kompaktes, einfach zu handhabendes Gebilde, das zeitsparend in einen dafür vorgesehenen Kanal bzw. Raum eines Fahrzeugs abdichtend einbaubar ist. Das Rahmenelement kann aus einer Kunststoff-Giessmasse, einer Kunststoff-Spritzgiessmasse, einem Kunststoffschaummaterial bzw. aus Metall sein. Als Metall kommt bspw. Aluminium zur Anwendung. Desgleichen sind z.B. metallversteifte Kunststoff-Rahmenelemente möglich. Vorzugsweise besteht das Rahmenelement aus einer geschäumten Kunststoffmasse.

Weitere Einzelheiten, Merkmale und Vorteile ergeben sich aus der nachfolgenden Beschreibung eines in der Zeichnung schematisch dargestellten Ausführungsbeispieles des erfindungsgemässen Filters. Es zeigt:

Fig. 1 eine Ansicht des Filters von vorne,
Fig. 2 einen Schnitt entlang der Schnittlinie II-II in Fig.1, und
Fig. 3 eine stark vergrösserte Darstellung des Details III in Fig.2.

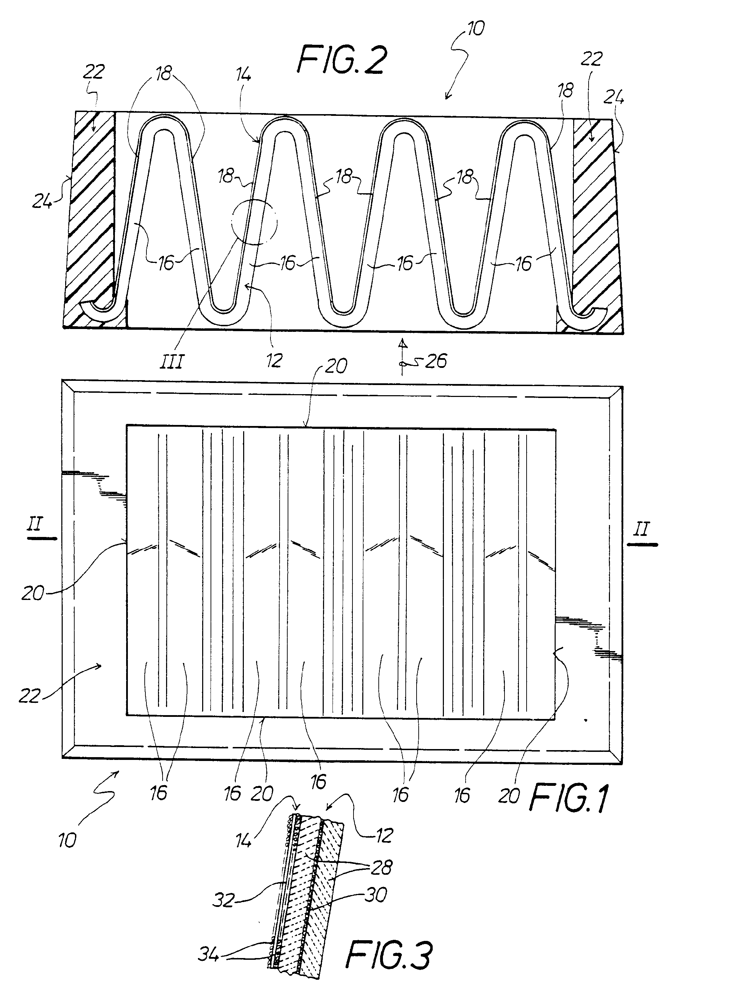

Die Figuren 1 und 2 zeigen ein Filter 10 mit einer Partikelfilterlage 12 und einer Adsorberfilterlage 14, wobei die Partikelfilterlage 12 und die Adsorberfilterlage 14 flächig unmittelbar nebeneinander angeordnet und gemeinsam zick-zack-förmig zusammengefaltet sind, so dass die Faltabschnitte 16 der Partikelfilterlage 12 und die Faltabschnitte 18 der Adsorberfilterlage 14 ineinandergreifen (sh. Fig. 2). Am Umfangsrand 20 des Filters 10 ist ein Rahmenelement 22 vorgesehen, das aus einer geschäumten Kunststoffmasse besteht, und das zur Fixierung der gemeinsam zusammengefalteten Partikelfilterlage 12 und Adsorberfilterlage 14 vorgesehen ist. Das Rahmenelement 22 weist eine konische Aussenfläche 24 auf, um zwischen dem Filter 10 und der (nicht gezeichneten) Wandung eines Einbauraumes eine Abdichtung herzustellen. Die Luftströmungsrichtung der zu filternden Luft ist in Fig. 2 durch den Pfeil 26 angedeutet.

Fig. 3 zeigt in einem vergrösserten Maßstab abschnittweise die Adsorberfilterlage 14 und die Partikelfilterlage 12. Aus dieser Figur ist ersichtlich, dass die Partikelfilterlage 12 zwei Lagen 28 aufweist, zwischen denen ein plastisch verformbares Versteifungselement 30 angeordnet ist. Das Versteifungselement 30 besteht aus einem plastisch verformbaren Kunststoffmaterial und ist als luftdurchlässiges Gitter ausgebildet. Die beiden Lagen 28 der Partikelfilterlage 12 bestehen aus einem Elektretfiltermaterial vorzugsweise aus Polycarbonatund/oder Polypropylen-Mikrofasern.

Die Adsorberfilterlage 14 weist einen luftdurchlässigen dünnen Trägerkörpere 32 auf, an dem Adsorberpartikel 34 mittels eines Bindemittels fixieret sind. Der Trägerkörper besteht vorzugsweise aus einem Spinnvlies aus synthetischem Fasermaterial. Bei den Adsorberpartikeln 34 handelt es sich um Aktivkohlepartikel und/oder um Partikel aus einem synthetischen Ionenaustauschermaterial. Die Aktivkohlepartikel können in an sich bekannter Weise mit einer Beschichtung versehen sein.

Die benachbarten zick-zack-förmig verlaufenden Faltabschnitte weisen voneinander einen Abstand auf, der grössenordnungsmässig in Abhängigkeit von den zur Anwendung gelangenden Materialien bis zu 2 cm oder mehr betragen kann. Dadurch ergibt sich ein Filter mit einem relativ geringen Druckabfall und gleichzeitig guten Filtereigenschaften.

**Patentansprüche**

1. Filter, insbes. für die Reinigung der einer Fahrgastzelle eines Fahrzeuges zugeführten Luft, mit einer zick-zack-förmig gefalteten Partikel- (12) und Adsorberfilterlage (14), wobei die Partikelfilterlage (12) und die Adsorberfilterlage (14) in Strömungsrichtung der Luft (26) hintereinander angeordnet sind und die Partikelfilterlage (12) flächig unmittelbar neben der Adsorberfilterlage (14) angeordnet und mit der Adsorberfilterlage (14) gemeinsam derart zick-zack-förmig zusammengefaltet ist, dass die Faltabschnitte (18) der Adsorberfilterlage (14) und die Faltabschnitte (16) der Partikelfilterlage (12) in der Luftströmungsrichtung (26) liegen und ineinandergreifen, **dadurch gekennzeichnet,** dass die Partikelfilterlage (12) zwei Lagen (28) aus Elektretfiltermaterial aufweist, zwischen welchen ein plastisch verformbares, als Gitter aus Kunststoffmaterial ausgebildetes Versteifungselement (30) angeordnet ist, wobei die beiden Elektretmateriallagen (28) und das Versteifungselement (30) einen Verbund bilden, und dass die Adsorberfilterlage (14) einen luftdurchlässigen dünnen Trägerkörper (32) aufweist, an/oder in dem Adsorberpartikel (34) mittels eines Bindemittels fixiert sind.

2. Filter nach Anspruch, 1
**dadurch gekennzeichnet,**
dass das Elektretfiltermaterial Polysulfon-, Fluorcarbon-, Polyvinylchlorid-, Polycarbonat-, Polyester-, Polyethylen- und/oder Polypropylen-Mikrofasern aufweist.

3. Filter nach Anspruch 1 oder 2,
**dadurch gekennzeichnet,**
dass das Elektretfiltermaterial ein Flächengewicht zwischen 20 und 500 g/m$^2$ und eine Dicke zwischen 0,1 und 10 mm aufweist.

4. Filter nach Anspruch 1,
**dadurch gekennzeichnet,**
dass der Trägerkörper (32) der Adsorberfilterlage (14) aus einem Spinnvlies aus einem synthetischen Fasermaterial besteht.

5. Filter nach Anspruch 4,
**dadurch gekennzeichnet,**
dass der Trägerkörper (30) der Adsorberfilterlage (14) aus einem Polyester- und/oder Glasfaservlies besteht.

6. Filter nach Anspruch 4 oder 5,
**dadurch gekennzeichnet,**
dass zur Fixierung der Adsorberpartikel (34) als Bindemittel selbstvernetzende Polymer-Dispersionen oder thermoplastische Kunststoffe dienen.

7. Filter nach einem der Ansprüche 4 bis 6,
**dadurch gekennzeichnet,**
dass die Adsorberpartikel (334) aus Aktivkohle und/oder aus synthetischen Polymeradsorbern, aktivierten Resinen oder Zeolithen mit einer Partikelgrösse zwischen 0,05 und 2 mm besteht.

8. Filter nach einem der vorhergehenden Ansprüche,
**dadurch gekennzeichnet,**
dass am Umfangsrand (20) des Filters (10) ein Rahmenelement (22) vorgesehen ist.

9. Filter nach Anspruch 8,
**dadurch gekennzeichnet,**
dass das Rahmenelement (22) aus Kunststoff und/oder Metall besteht, durch welche die gemeinsam zusammengefaltete Partikelfilterlage (12) und Adsorberfilterlage (14) fixiert sind.

**Claims**

1. A filter, in particular for the purification of the air supplied to the passenger compartment of a vehicle, with a particle filter layer (12) and an adsorber filter layer (14) folded in a zigzag configuration, wherein the particle filter layer (12) and adsorber filter layer (14) are arranged one behind the other in the direction (26) of the air flow, and the particle filter layer (12) is arranged areawise directly next to the adsorber filter layer (14) and is folded together with the adsorber filter layer (14) in a zigzag configuration in such a way that the folded sections (18) of the adsorber filter layer (14) and the folded sections (16) of the particle filter layer (12) lie in the direction (26) of the air flow and engage in each other,
**characterized in that**
the particle filter layer (12) has two layers (28) of an electret filter material, between which there is arranged a plastically deformable stiffening element (30) formed as a lattice of a synthetic material, wherein the two electret material layers (28) and the stiffening element (30) form a sandwich compound, and that the adsorber filter layer (14) has a thin carrier body (32) permeable to air, whereon or wherein adsorber particles (34) are fixed by means of a binder.

2. A filter according to claim 1,
**characterizecd in that**
the electret filter material has microfibres of polysulphone, fluorocarbon, polyvinyl chloride, polycarbonate, polyester, polyethylene, and/or polypropylene.

3. A filter according to claim 1 or 2,
**characterized in that**
the electret filter material has an areal weight of between 20 and 500 g/m$^2$ and a thickness between 0.1 and 10 mm.

4. A filter according to claim 1,
**characterized in that**
the carrier body (32) of the adsorber filter layer (14) consists of a spun fleece of a synthetic fibre material.

5. A filter according to claim 4,
**characterized in that**
the carrier body (30) of the adsorber filter layer (14) consists of a polyester and/or fibre glass fleece.

6. A filter according to claim 4 or 5,
**characterized in that**
self cross-linking polymer dispersions or thermoplastic synthetic materials are used as binders for the fixing of the adsorber particles (34).

7. A filter according to one of claims 4 to 6, **characterized in that** the adsorber particles (334) consist of activated charcoal and/or synthetic polymer adsorbers, activated resins or zeolites with particle size of between 0.05 and 2 mm.

8. A filter according to one of the preceding claims, **characterized in that** on the peripheral edge (20) of the filter (10), provision is made for a frame element (22).

9. A filter according to claim 8, **characterized in that** the frame element (22) consist of a plastic material and/or metal whereby the jointly folded particle filter layer (12) and adsorber filter layer (14) are fixed in position.

**Revendications**

1. Filtre, en particulier pour la purification de l'air envoyé dans la cabine d'un véhicule, comportant une couche de filtration de particules (12) et une couche adsorbante (14) pliées en zig-zag, la couche de filtration de particules (12) et la couche adsorbante (14) étant disposées l'une derrière l'autre dans la direction d'écoulement de l'air (26) et la couche de filtration de particules (12) étant disposée directement contre la surface de la couche adsorbante et plissée en zig-zag avec elle de manière telle que les sections de plis (18) de la couche adsorbante (14) et les sections de plis (16) de la couche de filtration de particules (12) soient situées dans la direction d'écoulement de l'air (26) et s'enchevêtrent l'une dans l'autre, caractérisé en ce que la couche de filtration de particules (12) se compose de deux couches (28) de matériau filtrant du type electret entre lesquelles est disposé un élément de raidissement plastique déformable sous forme d'une grille (30) en matière synthétique, les deux couches (28) en matériau du type electret et l'élément de raidissement (30) formant un ensemble unitaire, et en ce que la couche adsorbante (14) se compose d'un corps support (32) mince et perméable à l'air sur /dans lequel des particules adsorbantes (34) sont fixées au moyen d'un agent adhésif.

2. Filtre selon la revendication 1, caractérisé en ce que le matériau du type electret consiste en des micro-fibres de polysulfone, de fluorocarbone, de chlorure de polyvinyle, de polycarbonate, de polyester, de polyethylène et/ou de polypropylène.

3. Filtre selon les revendications 1 ou 2, caractérisé en ce que le matériau du type electret présente une densité superficielle comprise entre 20 et 500 g/m² et une épaisseur comprise entre 0,1 et 10 mm.

4. Filtre selon la revendication 1, caractérisé en ce que le corps support (32) de la couche adsorbante (14) consiste en un feutre de matériau en fibres synthétiques.

5. Filtre selon la revendication 4, caractérisé en ce que le corps support (32) de la couche adsorbante (14) consiste en un feutre de fibres de polyester et/ou de verre.

6. Filtre selon les revendications 4 ou 5, caractérisé en ce que pour la fixation des particules adsorbantes (34), on utilise comme agent adhésif une dispersion de polymère auto-réticulant ou une matière synthétique thermoplastique.

7. Filtre selon une des revendications 4 à 6, caractérisé en ce que les particules adsorbantes (34) consistent en charbon actif et/ou en polymères synthétiques adsorbants, en résines activées ou en zéolithes ayant une grosseur de particules comprise entre 0,05 et 2 mm.

8. Filtre selon l'une des revendications précédentes, caractérisé en ce que sur le bord périphérique (20) du filtre (10) est prévu un élément d'encadrement (22).

9. Filtre selon la revendication 8, caractérisé en ce que l'élément d'encadrement (22) est en matériau synthétique et/ou en métal, dans lequel sont fixées les couches de filtration de particules (12) et adsorbante (14) repliées ensemble.

*FIG.2*

*FIG.1*

*FIG.3*